# EUROPÄISCHE PATENTSCHRIFT

(11) **EP 3 938 750 B1**
(45) Veröffentlichungstag und Bekanntmachung des Hinweises auf die Patenterteilung: **01.05.2024**
(21) Anmeldenummer: 20710929.9
(22) Anmeldetag: 12.03.2020
(51) Int. Cl.: G01L 7/04, G01L 9/00, G01L 19/00, G01L 11/04, G01F 1/34

(54) **ROHRSENSOR MIT VERFORMUNGSKÖRPER**
TUBULAR SENSOR WITH DEFORMATION BODY
CAPTEUR DE TUBE DOTÉ D'UN CORPS DÉFORMABLE

(30) Priorität: 13.03.2019 DE 102019106342
(43) Veröffentlichungstag der Anmeldung: 19.01.2022
(60) Teilanmeldung: 22201682.6
(73) Patentinhaber: WIKA Alexander Wiegand SE & Co. KG, 63911 Klingenberg/Main (DE)
(72) Erfinder: DIENER, Markus, 63820 Elsenfeld (DE); SPIELER, Lukas, 63875 Mespelbrunn (DE); BLÖCHER, Rolf, 63897 Miltenberg (DE); ROTHENBACH, Thomas, 63927 Bürgstadt (DE)
(74) Vertreter: Liedtke & Partner Patentanwälte
(86) Internationale Anmeldenummer: PCT/EP2020/056661
(87) Internationale Veröffentlichungsnummer: WO 2020/182945

(56) Entgegenhaltungen:
- WO-A1-00/65984
- WO-A1-01/01099
- DE-A1-102016 015 447

## Beschreibung

### TECHNISCHES GEBIET

Die Erfindung betrifft ein Messsystem für eine physikalische Größe, insbesondere Druck.

### STAND DER TECHNIK

Aus dem Stand der Technik, beispielsweise aus der US 4,207,551 A, der US 3,046,788 A und EP 0 074 574 A1, sind allgemein Messsysteme für aeine physikalische Größe, insbesondere Druck, bekannt. Solche Messsysteme umfassen einen rohrförmigen Verformungskörper, welcher an seinen Enden kreisförmige Querschnitte zum dichtenden Anschluss an einen Prozess aufweist. Der rohrförmige Verformungskörper weist außerdem einen vom kreisförmigen abweichend, beispielsweise oval, elliptisch, flachoval oder auch nicht achsensymmetrisch, wie z. B. einen "D-förmigen", geformten Messabschnitt bzw. Verformungskörper auf. Durch Änderung eines Prozessdrucks relativ zu einem Rohr-Außendruck wird eine elastische Geometrieänderung des rohrförmigen Verformungskörpers hervorgerufen. Wenn ein Innendruck größer als der Rohr-Außendruck ist, strebt ein verformter Rohrquerschnitt die Kreisform an und erzeugt dabei verschiedenartige Dehnungen und Stauchungen, die auch an einer Rohraußenoberfläche wirken. Wenn der Innendruck niedriger als der Rohr-Außendruck ist, strebt der Rohrquerschnitt zunehmend eine von der Kreisform abweichende Geometrie an, das heißt, die Ausprägung der Verformung wird vergrößert. Hierbei kann von einem "Zusammendrücken" des Rohrquerschnitts gesprochen werden. Dies führt ebenso zu verschiedenartigen Dehnungen und Stauchungen, die auch an der Rohraußenoberfläche wirken. Im Folgenden wird unter einer Aufweitung des Rohrabschnitts auch ein Zusammendrücken verstanden, abhängig davon, ob im Messrohr ein Über- oder Unterdruck dem Rohr-Außendruck vorliegt. Bei Verwendung eines hinreichend festen federelastischen Materials soll dieser Effekt als Messeffekt für die Größe Druck benutzt werden.

Weiterhin ist aus der WO 01/01099 A1 ein Druckwandler bekannt, welcher ein Messrohr umfasst, von dem sich ein Teil als Reaktion auf einen Druck mechanisch verformt. Weiterhin umfasst der Druckwandler einen auf dem Messrohr angeordneten Dehnungsmesser zum Messen der Verformung des Messrohrs und ein Gehäuse, welches das Messrohr umgibt. Das Messrohr weist einen rechteckigen oder quadratischen Querschnitt auf. Das Gehäuse umfasst eine Abdeckung, an welchen starre Gehäuseflansche mit einem runden Querschnitt befestigt sind. Das Messrohr ist innerhalb des Gehäuses mit den Gehäuseflanschen verbunden. Dabei ist ein Ende des Messrohrs an dem Gehäuse angebracht und ein anderes Ende des Messrohrs ist verschiebbar in dem Gehäuse montiert. Das eine Ende ist an das Gehäuse geschweißt und das andere Ende ist mit einer flexiblen Dichtung an dem Gehäuse montiert ist. Das Messrohr und das Gehäuse sind mit Rohrsegmenten über Rohrflansche gekoppelt, die auch die Rohrsegmente mit dem Gehäuse verbinden.

Ferner ist aus der WO 00/65984 A1 ein Drucksensor bekannt, welcher ein Rohr zum Hindurchleiten eines Fluids und einen Sitz, der in einer Außenfläche des Rohrs angeordnet ist, mit einer bodenseitig angeordneten Membran. Die Membran planar und geht an ihrem Umfang in gleicher Ausdehnung in eine bogenförmige Innenfläche des Rohrs über. Zusätzlich umfasst der Drucksensor ein Messgerät, das in dem Sitz über der Membran angebracht ist, um deren Biegung unter dem Druck des Fluids innerhalb des Rohrs zu messen. Das Rohr weist eine Längsachse und auf gegenüberliegenden Längsseiten der Membran einen runden Querschnitt auf. Eine Rohrinnenfläche geht auf beiden Längsseiten der Membran in Längsrichtung von rund nach flach über.

Weiterhin ist aus der DE 10 2016 015 447 A1 ein Druckmittleraufbau zur Überwachung eines Drucks eines Prozessmediums bekannt.

### AUFGABE DER ERFINDUNG

Der Erfindung liegt die Aufgabe zugrunde, ein gegenüber dem Stand der Technik verbessertes Messsystem für eine physikalische Größe anzugeben.

### ZUSAMMENFASSUNG DER ERFINDUNG

Ein erfindungsgemäßes Messsystem für eine physikalische Größe, insbesondere Druck, umfasst ein Gehäuse und ein Messrohr. Das Messrohr umfasst zumindest einen rohrförmigen Verformungskörper, dessen Querschnitt zumindest partiell definiert von einem Kreisquerschnitt abweichend deformiert ist und welcher sich unter Druck elastisch aufweitet. Weiterhin umfasst das Messrohr zwei Zuführabschnitte, welche jeweils an Endabschnitten des Verformungskörpers angebracht sind und an ihren äußeren Randabschnitten jeweils einen Kreisquerschnitt aufweisen, und zwei Dichtabschnitte zum dichtenden Ankoppeln eines Messsystems an einen Prozess, wobei die Dichtabschnitte an den äußeren Randabschnitten der Zuführabschnitte angeformt sind. Ferner umfasst das Messrohr zwei angeformte Tragabschnitte, welche das Gehäuse tragen, eine Messsensorik, welche zumindest an zwei Punkten an einem Abschnitt des Verformungskörpers Werte einer Dehnung und/oder Aufweitung misst, und eine Auswerteeinheit, welche gemessene Werte der Dehnung und/oder Aufweitung elektronisch auswertet und als Messsignal ausgibt. Das Gehäuse umfasst das Messrohr in seiner Erstreckungsrichtung außen zumindest teilweise und stabilisiert dieses gegen mechanische Einflüsse und andere Einflüsse.

Das Messsystem bildet eine kostengünstige Lösung für ein rohrförmiges Messsystem für die primäre Messgröße Druck. Weitere Messgrößen, wie z. B. eine Temperatur und ein Durchfluss sowie daraus abgeleitete Messgrößen, wie z. B. eine Dichte, können darüber hinaus integriert sein. Dabei weist das Messsystem einen Aufbau auf, welcher mit einem freien Querschnitt durchströmbar ist. Außerdem ist der Aufbau totraumfrei, das heißt, es gibt keine Möglichkeit für ein das Messsystem durchströmendes Medium, sich in Sackgassen oder Hinterschnitten zu verfangen oder dort Ablagerungen zu bilden. Dabei ermöglicht das Messsystem, dass äußere Druckschwankungen, Temperatureffekte, Umgebungseinflüsse und mechanische Rückwirkungen ausreichend kompensiert oder unterbunden werden. Dabei können besonders hohe Messgenauigkeiten erreicht werden.

Weiterhin umschließt das Gehäuse das Messrohr dichtend. Somit kann das Gehäuse mit einem Unterdruck oder einem Vakuum gegenüber der Außenatmosphäre beaufschlagt werden.

In einer möglichen weiteren Ausgestaltung des Messsystems ist das Messrohr innen mit Silikon oder einem wechselbaren Silikonüberzugsstück ausgekleidet, so dass ein Strömungswiderstand für das durchströmende Medium minimiert ist und/oder durch die Wechselbarkeit die Anforderungen an eine erhöhte Hygiene durch eine Möglichkeit eines Einmalgebrauch abdeckt.

In einer möglichen weiteren Ausgestaltung des Messsystems weist der Verformungskörper des Messrohrs eine Wandstärke von 0,1 mm bis 0,5 mm oder von 0,2 mm bis 3,0 mm auf.

In einer möglichen weiteren Ausgestaltung des Messsystems weisen Anschlussstücke des Messrohrs einen Innendurchmesser von 3 mm bis 40 mm oder 20 mm bis 60 mm auf.

In einer möglichen weiteren Ausgestaltung des Messsystems weisen die Zuführabschnitte eine Wandstärke auf, welche einer Wandstärke des Verformungskörpers entspricht. Somit entstehen keine Stufen zwischen den Zuführabschnitten und dem Verformungskörper, woraus wiederum ein geringer Strömungswiderstand und freier Querschnitt für das durchströmende Medium resultieren.

In einer möglichen weiteren Ausgestaltung des Messsystems sind die Zuführabschnitte massiv ausgeführt und/oder weisen einen Übergang der Innenkontur von kreisförmig in oval auf. Insbesondere zeichnen sich die massiv ausgeführten Zuführabschnitte gegenüber dem Verformungskörper durch eine besonders geringe Deformierbarkeit aus. Die massive Ausbildung der Zuführabschnitte vermeidet eine Verformung derselben und eine daraus resultierende Messwertverfälschung. Beispielsweise erfolgt eine Herstellung der massiv ausgeführten Zuführabschnitte durch spanende Bearbeitung, wie beispielsweise Bohren und/oder Fräsen, eines aus einem Vollmaterial, insbesondere einem Metall oder einer Metalllegierung gebildeten Körpers. Alternativ kann die Herstellung durch Umformung von Vollmaterial erfolgen.

In einer möglichen weiteren Ausgestaltung des Messsystems sind die Zuführabschnitte einteilig mit den Tragabschnitten und den Dichtabschnitten ausgeführt. Auch hieraus resultieren ein geringer Strömungswiderstand und freier Querschnitt für das durchströmende Medium.

In einer möglichen weiteren Ausgestaltung des Messsystems ist das Gehäuse stoffschlüssig und dichtend an die Tragabschnitte angefügt. Somit kann das Gehäuse mit dem Unterdruck oder Vakuum beaufschlagt werden.

In einer möglichen weiteren Ausgestaltung des Messsystems weist das Gehäuse einen Serviceport zur Installation oder Kontrolle des Vakuums oder Unterdrucks auf, um in vorteilhafter Weise die Installation des Vakuums oder Unterdrucks zu erleichtern.

In einer möglichen weiteren Ausgestaltung des Messsystems weist das Gehäuse im Inneren einen Drucksensor oder Vakuumsensor zur Überwachung des Vakuums oder des Unterdrucks auf, um in vorteilhafter Weise eine Überwachung des Vakuums oder Unterdrucks zu erleichtern.

In einer möglichen weiteren Ausgestaltung des Messsystems weist das Messrohr einen aufgebrachten Temperatursensor auf, der im Inneren des Gehäuses oder auf dem Messrohr positioniert ist. Somit kann zusätzlich eine Temperatur des Mediums erfasst und gegebenenfalls verarbeitet werden.

In einer möglichen weiteren Ausgestaltung des Messsystems ist das Gehäuse zur Außenatmosphäre hin oder zu einem zweiten Teil des Gehäuses mit einer Glasdurchführung versehen, durch welche Kontakte zur Signalübertragung geführt sind. Dies ermöglicht eine zuverlässige Signalübertragung zur Ausgabe, Speicherung und/oder Weiterverarbeitung der erfassten Daten.

In einer möglichen weiteren Ausgestaltung des Messsystems umfasst dieses eine per Steckkontakt kontaktierbare Schnittstelle und/oder eine Anzeige zur Ausgabe von Messwerten, um in vorteilhafter Weise eine Anzeige der erfassten Daten zu ermöglichen.

In einer möglichen weiteren Ausgestaltung des Messsystems ist die Auswerteeinheit ausgebildet, anhand von
- mittels eines optischen Messsystems erfassten Daten,
- mittels einer Laseroptik erfassten Daten, wobei die Laseroptik
   - anhand von über Spiegel geleiteter Laserstrahlung eine Referenzmessung durchführt
      und/oder
   - anhand von über einen Strahlteiler oder einen gemeinsamen Gang über zumindest drei Spiegel geführter Laserstrahlung eine Direktmessung durchführt,
- mittels zumindest eines kapazitiven Sensors erfassten Daten,
- mittels zumindest eines dehnungssensitiven optischen Fasersensors, welcher um das Messrohr gewickelt ist, erfassten Daten,
- mittels zwei oder vier Dehnungsmessstreifen erfassten Daten,
- mittels einer Wheatstonebrücke, welche aus Dehnungsmessstreifen gebildet ist, erfassten Daten und/oder
- mittels zumindest eines Surface-Acoustic-Wave-Sensors erfassten Daten Dehnungen und/oder Aufweitungen des Verformungskörpers des Messrohrs, insbesondere unter Zuhilfenahme einer Fast Fourier Transformation, auszuwerten. Eine solche Auswertung ist sehr zuverlässig.

In einer möglichen weiteren Ausgestaltung des Messsystems umfasst dieses Sensoren zur Ermittlung eines Durchflusses und zumindest eine Ausgabeeinheit zur Ausgabe eines den Durchfluss, einen Druck und eine Temperatur umfassenden Signals.

In einer möglichen weiteren Ausgestaltung des Messsystems hat das Gehäuse eine Länge von 100 mm bis 300 mm oder von 50 mm bis 800 mm.

In einer möglichen weiteren Ausgestaltung des Messsystems sind das Messrohr und die Zuführabschnitte mittels Schweißnähten gefügt, wobei die Schweißnähte in einem Anschweißen, Durchschweißen, orbitalen Schweißen und/oder Laserschweißen hergestellt sind. Die Schweißnähte sind dabei relativ einfach erzeugbar und ermöglichen eine fluiddichte und besonders haltbare Fügung des Messrohrs und der Zuführabschnitte sowie eine geringe Rauheit einer Innenoberfläche des Messrohrs und der Zuführabschnitte im Bereich der Schweißnähte. Dadurch eignet sich das Messsystem insbesondere für Anwendungen im pharmazeutischen Bereich sowie in der Lebensmittelindustrie.

In einer möglichen weiteren Ausgestaltung des Messsystems weist eine Rauheit der Innenoberfläche des Messrohrs und der Zuführabschnitte im Bereich der Schweißnähte einen Ra-Wert von kleiner oder gleich 3 µm, insbesondere von kleiner oder gleich 2 µm, insbesondere von kleiner oder gleich 0,8 µm, auf. Hieraus resultieren ein geringer Strömungswiderstand und freier Querschnitt für das durchströmende Medium. Weiterhin lassen sich hierdurch Anforderungen an eine erhöhte Reinheit von Prozessmedien abbilden.

In einer möglichen weiteren Ausgestaltung des Messsystems verläuft im Bereich der Schweißnähte ein Übergang zwischen einer Innenoberfläche des Messrohrs und der Zuführabschnitte zumindest im Wesentlichen eben und/oder ohne Kanten, Stufen und/oder ohne Auswürfe mit einer Höhe von maximal 2 mm. Auch hieraus resultieren ein geringer Strömungswiderstand und freier Querschnitt für das durchströmende Medium.

In möglichen weiteren Ausgestaltungen des Messsystems weisen bzw. weist der Messabschnitt bzw. Verformungskörper und/oder die Zuführabschnitte einen größeren Durchmesser und/oder Querschnitt als die Dichtabschnitte auf.

### BESCHREIBUNG DER ZEICHNUNGEN

Ausführungsbeispiele der Erfindung werden im Folgenden anhand von Zeichnungen näher erläutert.

Einander entsprechende Teile sind in allen Figuren mit den gleichen Bezugszeichen versehen.

Dabei zeigen:
- Figur 1: schematisch ein Messsystem für eine physikalische Größe,
- Figuren 2A bis 2K: schematisch verschiedene Querschnitte eines rohrförmigen Verformungskörpers eines Messrohrs,
- Figur 3: schematisch eine perspektivische Ansicht eines Messrohrs,
- Figuren 4A und 4B: schematisch verschiedene Darstellungen eines Messrohrs und
- Figur 5: schematisch eine Schnittdarstellung eines Messrohrs, umfassend eine optische Auswertung.

Einander entsprechende Teile sind in allen Figuren mit den gleichen Bezugszeichen versehen.

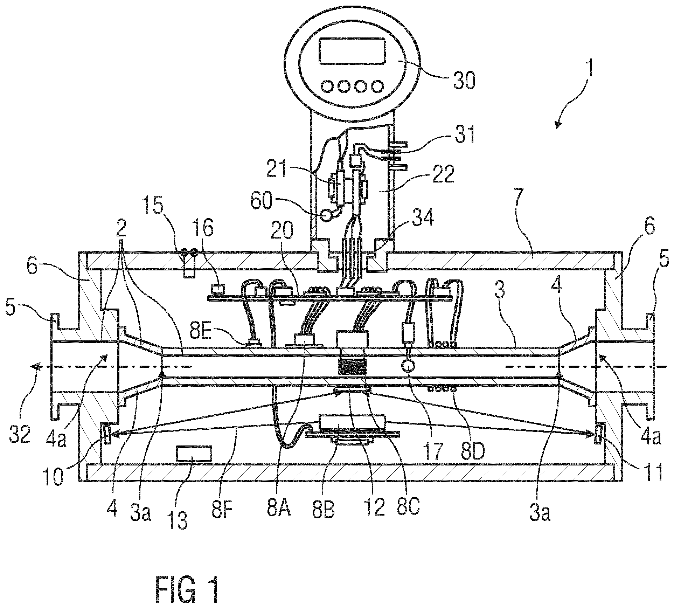

In Figur 1 ist schematisch ein mögliches Ausführungsbeispiel eines Messsystems 1 für eine physikalische Größe dargestellt.

Das Messsystem 1 umfasst ein Messrohr 2.

Das Messrohr 2 umfasst wiederum einen Verformungskörper 3, welcher zumindest partiell definiert, von einem Kreisquerschnitt abweichend, flachgedrückt oder deformiert ist und sich unter Druck elastisch aufweiten kann.

Weiterhin umfasst das Messrohr 2 zwei Zuführabschnitte 4, welche jeweils an Endabschnitten 3a des Verformungskörpers 3 angebracht sind und nach außen hin, an ihren äußeren Randabschnitten 4a, einen Kreisquerschnitt aufweisen. Die Zuführabschnitte 4 weisen an ihren Enden nach außen hin angeformte Dichtabschnitte 5 auf, welche zu einem dichtenden Ankoppeln des Messsystems 1 an einen Prozess vorgesehen sind.

An die Zuführabschnitte 4 und/oder Dichtabschnitte 5 sind Tragabschnitte 6 angeformt, welche ein äußeres Gehäuse 7 des Messsystems 1 tragen.

Eine Messtechnik oder Messsensorik 8, welche an einem Abschnitt des Verformungskörpers 3 Werte einer Dehnung und/oder Aufweitung AW misst, ist mit kapazitiven Sensoren 8A und/oder einer Laseroptik 8B und/oder dehnungssensitiven Sensoren oder Dehnungsmessstreifen 8C realisiert.

Die Laseroptik 8B lenkt zumindest einen Laserstrahl 8F auf die Spiegel 10, 11, welche für eine Referenzmessung ausgerichtet sind. An den Spiegeln 10, 11 wird der jeweilige Laserstrahl 8F auf einen am Verformungskörper 3 angeordneten Spiegel 12 gelenkt, welcher in Abhängigkeit der Aufweitung AW unterschiedliche Positionen relativ zu den Spiegeln 10, 11 und der Laseroptik 8B aufweist. Mittels eines nicht näher dargestellten Detektors, welcher beispielsweise im Bereich zumindest eines der Spiegel 10, 11 oder im Bereich der Laseroptik 8B angeordnet ist, kann in Abhängigkeit einer Position des Spiegels 12 eine entsprechende Auftreffposition von mittels des Spiegels 12 reflektierter Laserstrahlung ermittelt und daraus ein Wert der Aufweitung AW abgeleitet werden. Alternativ ist der Spiegel 12 selbst als Detektor ausgebildet, beispielsweise als CCD-Chip.

Weiterhin kann ein Fasersensor 8D Dehnungen erfassen. Optional kann mittels einer so genannten Faser-Bragg-Technik zusätzlich zur Dehnung zugleich eine Temperatur gemessen werden. Hierzu wird z. B. eine Faser des Fasersensors 8D um einen betreffenden Rohrabschnitt des Messrohrs 2 gewickelt und optional mit elastischem Verguss fixiert.

Alternativ wird mittels Dehnungsmessstreifen 8C, welche auf den Verformungskörper 3 appliziert sind und auch als Dehnungs-Mess-Widerstände bezeichnet werden, eine Dehnung und/oder Aufweitung AW gemessen. Hierzu kommen insbesondere Dehnungsmessstreifen 8C in Frage, die auf den Verformungskörper 3 aufgeklebt sind, oder andere geeignete Dehnungsmesselemente, die durch ein anderes geeignetes Verfahren auf den Verformungskörper 3 aufgebracht sind.

Weiterhin können so genannte Surface-Acoustic-Wave-Sensoren 8E, kurz SAW-Sensoren, Dehnungen sowie einen Durchfluss im Inneren des Messrohrs 2 sensieren.

Optional ist hierfür das Gehäuse 7 evakuiert oder mit einem Vakuum über einen Anschluss 15 versehen, welcher dichtend verschweißt ist oder als Kupplung zu Servicezwecken versehen ist. Um das Vakuum im Inneren des Gehäuses 7 möglichst lange aufrecht zu erhalten, ist im Inneren des Gehäuses 7 in einer möglichen Ausgestaltung Gettermaterial 13 zur Aufnahme von Feuchtigkeit angeordnet.

Das Vakuum im Inneren des Gehäuses 7 wird in einer möglichen Ausgestaltung mit einem Vakuumsensor 16 überwacht.

Ein angebrachter Temperatursensor 17 erfasst eine Temperatur am Messrohr 2 zur Kompensation von Temperaturfehlern.

Diese wird mit den Messwerten in einer Auswerteinheit, insbesondere einer Auswerteelektronik auf einer Platine 20 im Gehäuse 7 oder auf einer Platine 21 in einem zweiten Gehäuseteil 22, verrechnet. Dort werden die erfassten Messwerte ausgewertet, umgesetzt und als Messsignal über eine Anzeige- und/oder Funkeinrichtung 30 oder eine Steckerschnittstelle 31 ausgegeben. Hierzu kann auch ein Relativdrucksensor zur Erfassung eines Außendrucks relativ zum Unterdruck im Gehäuse 7 oder ein barometrischer Umgebungsdrucksensor 60 zur Erfassung des Außendrucks für die Ausgabe eines Relativdrucksignals verwendet werden.

Das Gehäuse 7 umfasst das Messrohr 2 in seiner Erstreckungsrichtung 32 außen zumindest teilweise, alternativ natürlich gänzlich dichtend, per Schweißung an den Tragabschnitten 6. Es umfasst das Messrohr 2 und stabilisiert es gegen mechanische Einflüsse und andere Einflüsse.

Das Gehäuse 7 und den Gehäuseteil 22 trennt eine dichtende Glasdurchführung 34, welche die Messsignale nach außen führt und/oder eine Strom- und Spannungsversorgung nach innen führt. Alternativ zur Glasdurchführung 34 können Signale und Energie auch per Funk übertragen werden, z. B. per RFID oder über Induktion. Das Gehäuseteil 22 kann auch komplett vergossen sein und die Platinen 20, 21 sind hierzu mit Aussparungen versehen, so dass sich die Vergussmasse gut verteilt und alle Bauteile gut umschließt. Alternativ sind die Platinen 20, 21 und Leiterbahnen auch teilweise flexibel als flexible Leiterplatten (englisch: flexible printed circuit, kurz: FPC) ausgebildet.

In einer möglichen weiteren Ausgestaltung des Messsystems 1 weist der Messabschnitt bzw. Verformungskörper 3 einen oder mehrere Temperatursensoren 17 auf sowie zumindest ein Heizelement, so dass über eine Auswertung einer Temperaturmessung eine Fließrichtung eines Mediums und/oder eine Fließgeschwindigkeit desselben ermittelt werden können bzw. kann.

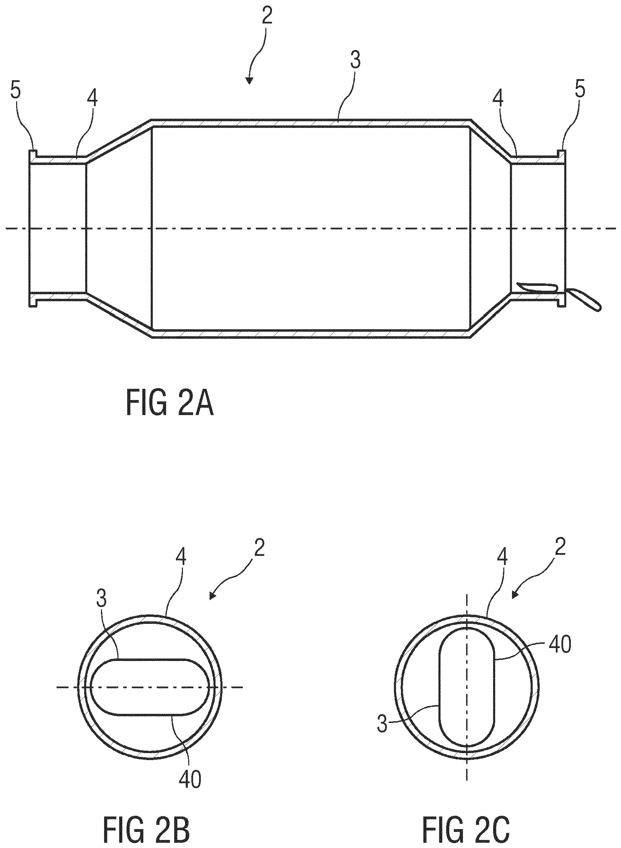

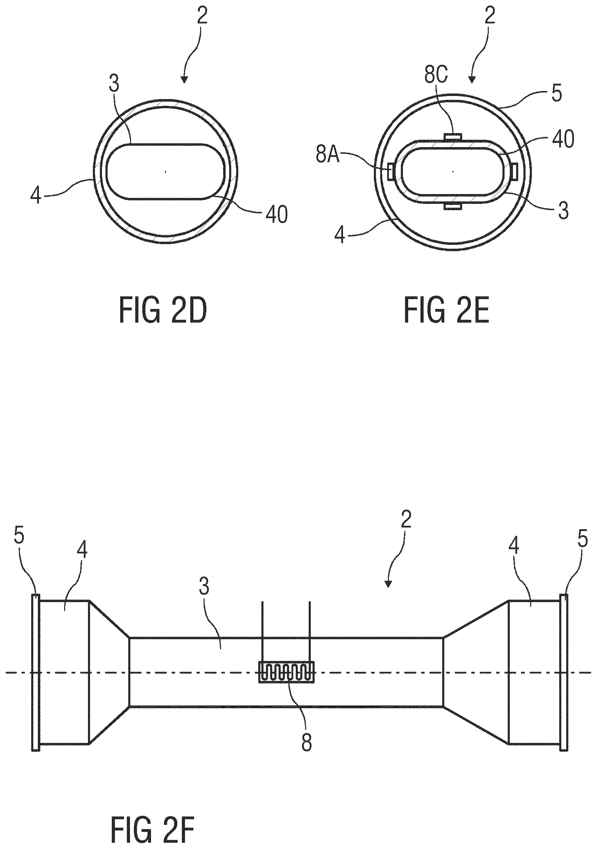

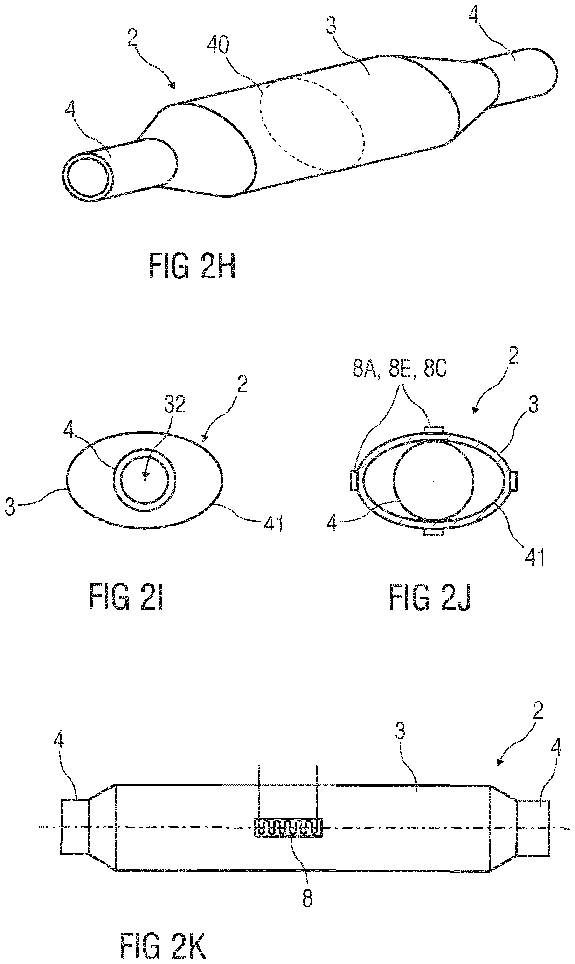

Die Figuren 2A bis 2F und 2H bis 2K zeigen Querschnitte des rohrförmigen Verformungskörpers 3 und somit verschiedene Messquerschnitte des Messrohrs 2, so ein Flachoval 40 oder eine Ellipse 41, sowie Anordnungen von Sensoren, insbesondere kapazitiven Sensoren 8A, Surface-Acoustic-Wave-Sensoren 8E und/oder Dehnungsmessstreifen 8C.

Insbesondere kann hierbei das Messrohr 2 so ausgerichtet werden, dass dieses leerlaufen kann, wenn eine Anlage entleert wird (Vgl. hierzu Figur 2C oder Figur 2J). Eine leichte Schräglage kann hierbei vorteilhaft sein.

Die in den Figuren 2H bis 2K dargestellten Ausführungsbeispiele werden beispielsweise durch Aufweitung in so genannten Hydroforming-Prozessen mittels Innendruck hergestellt. Insbesondere ist hierbei vorteilhaft, wenn der Messabschnitt bzw. Verformungskörper 3 immer einen größeren Durchmesser oder Querschnitt als der Dichtabschnitt 5 hat.

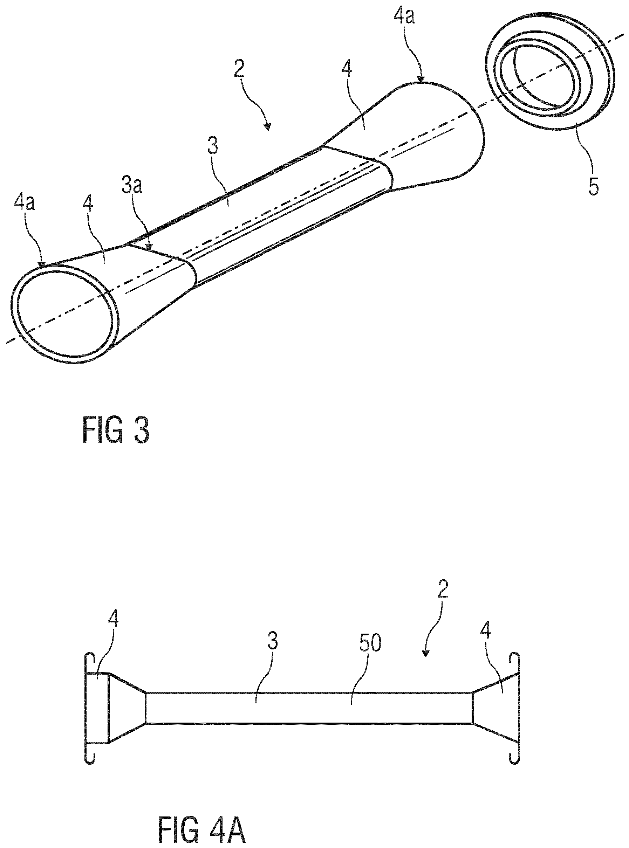

In Figur 3 ist eine perspektivische Ansicht eines möglichen Ausführungsbeispiels eines Messrohrs 2 mit einem Verformungskörper 3 und zwei Zuführabschnitten 4, welche die Kreisform an den Verformungskörper 3 anbinden, dargestellt. Dichtabschnitte 5 können optional angeschweißt werden.

Figur 4A zeigt ein weiteres mögliches Ausführungsbeispiel eines Messrohrs 2.

Hierbei ist ein innerer Überzug des Messrohrs 2 mit Silikon als elastische Auskleidung möglich, welcher entfernt werden kann, oder auch eine Ausführung mit wechselbarem Silikonüberzugsstück 50.

In der dargestellten Ausgestaltung ist des Weiteren eine massive Ausgestaltung der zwei Zuführabschnitte 4 gezeigt, welche einerseits den Verformungskörper 3 per Schweißung angebunden haben und andererseits die Dichtabschnitte 5 und die Tragabschnitte 6 für das nicht gezeigte Gehäuse 7 angeformt haben. Die Abschnitte weisen insbesondere den Übergang von einem runden Querschnitt in den ovalen Messabschnitt bzw. Verformungskörper 3 auf.

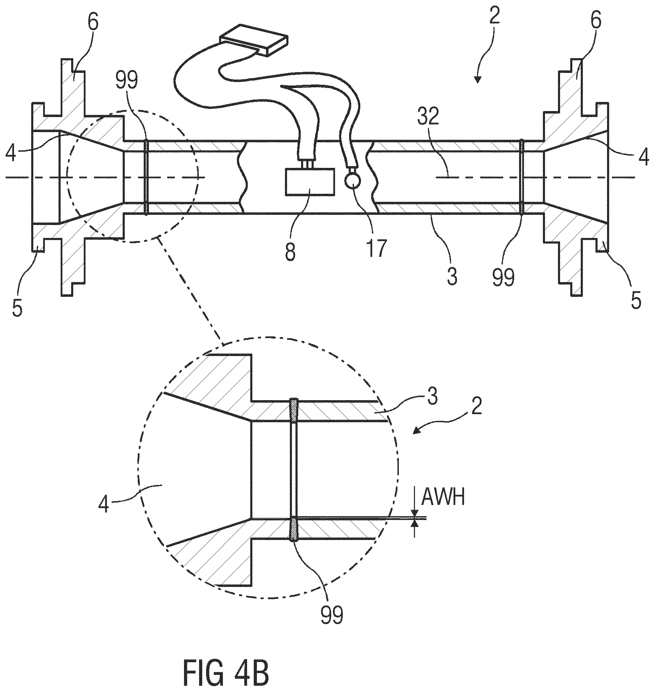

Figur 4B zeigt ein Messrohr 2 mit einem Vorformungskörper 3 und einem Zuführabschnitt 4 in einer weiteren möglichen Ausgestaltung bezüglich der Schweißung. Hierbei kann die Schweißung, wie gezeigt, durch Anschweißen realisiert sein oder auch bei Fügen des rohrförmigen Verformungskörpers 3 in einen Kragen mittels Durchschweißen. Hierbei kann es vorgesehen sein, dass eine Schweißqualität ohne Nachbearbeitung erreicht wird, bei der eine Schweißnaht 99 an einer Innenfläche einen Auswurf aufweist, der eine geringe Auswurfhöhe AWH von nur wenigen Millimetern oder weniger erreicht.

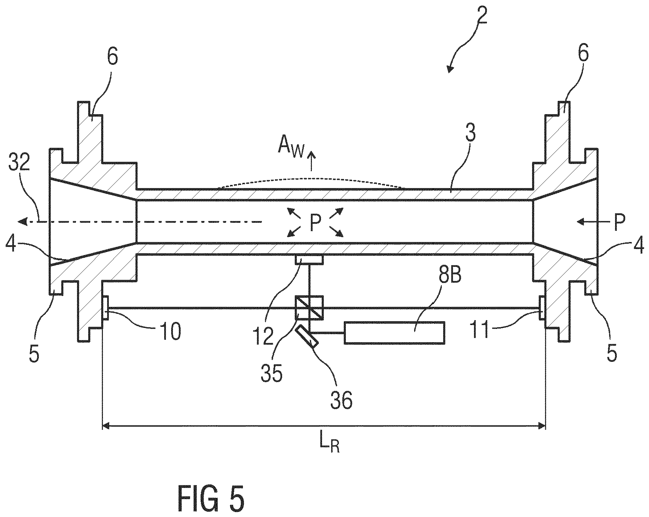

In Figur 5 ist ein Messrohr 2 in einer weiteren Ausgestaltung mit einer interferometrischen Messung dargestellt.

Hierbei sind mögliche Fehler durch einen transversalen Versatz eliminiert. Hierbei wird durch einen Strahlteiler 35 einerseits eine Referenzlänge LR erfasst, andererseits eine Aufweitung AW durch einen Prozessdruck P des Verformungskörpers 3 durch einen Laufzeitversatz von Licht erfasst.

Der Strahlteiler 35 kann hierbei optional zyklisch geschaltet werden und die Laseroptik 8B ist optional auch als LED-Laser, Laserdiode oder als Photodiode ausgeführt.

Auch kann die Laseroptik 8B zugleich Strahler und Detektor sein, denn der Detektor, beispielsweise auch ausgebildet in Form eines CCD-Sensors oder als Foto-Diode, kann über einen Spiegel oder Strahlteiler 35 angekoppelt sein und so auch im Aufbau der Laseroptik 8B integriert sein.

Beispielsweise wird mittels der Laseroptik 8B Laserstrahlung auf den Spiegel 36 gerichtet und von diesem auf den Strahlteiler 35. Ausgehend hiervon wird die Laserstrahlung zum Spiegel 10 und von diesem zurück durch Strahlteiler 35 zum Spiegel 11 gesendet. Am Spiegel 11 ist in einer möglichen Ausgestaltung ein Detektor angeordnet, wobei das mit diesem empfangene Signal gemäß des zuvor beschriebenen Verlaufs der Laserstrahlung als Referenzmessung mit der Referenzlänge LR verwendet werden kann. Weiterhin wird die Laserstrahlung vom Spiegel 11 zurück zum Strahlteiler 35 reflektiert, welcher diese zum Spiegel 36 und zur Laseroptik 8B lenkt. Somit kann auch mittels der Laseroptik 8B eine Referenzmessung mit der Referenzlänge LR durchgeführt werden.

Die von der Laseroptik 8B auf den Spiegel 36 und von diesem auf den Strahlteiler 35 gerichtete Laserstrahlung wird zusätzlich auch auf den am Verformungskörper 3 angeordneten Spiegel 12 gelenkt, welcher in Abhängigkeit der Aufweitung AW unterschiedliche Positionen aufweist. Von dem Spiegel 12 wird Laserstrahlung zurück zum Strahlteiler 35 reflektiert, welcher diese zum Spiegel 11 und zum Spiegel 36 ablenkt. Mittels des nicht näher dargestellten Detektors, welcher beispielsweise im Bereich des Spiegels 11 oder 12 angeordnet ist, kann so eine Laufzeit der Laserstrahlung und daraus folgend die Aufweitung AW bestimmt werden. Auch kann mittels der Laseroptik 8B eine Laufzeit der Laserstrahlung und daraus folgend die Aufweitung AW bestimmt werden.

### BEZUGSZEICHEN

- 1: Messsystem
- 2: Messrohr
- 3: Verformungskörper
- 3a: Endabschnitt
- 4: Zuführabschnitt
- 4a: Randabschnitt
- 5: Dichtabschnitt
- 6: Tragabschnitt
- 7: Gehäuse
- 8: Messsensorik
- 8A: kapazitiver Sensor
- 8B: Laseroptik
- 8C: Dehnungsmessstreifen
- 8D: Fasersensor
- 8E: Surface-Acoustic-Wave-Sensor
- 8F: Laserstrahl
- 10: Spiegel
- 11: Spiegel
- 12: Spiegel
- 13: Gettermaterial
- 15: Anschluss
- 16: Vakuumsensor
- 17: Temperatursensor
- 20: Platine
- 21: Platine
- 22: Gehäuseteil
- 30: Anzeige- und/oder Funkeinrichtung
- 31: Steckerschnittstelle
- 32: Erstreckungsrichtung
- 34: Glasdurchführung
- 35: Strahlteiler
- 36: Spiegel
- 40: Flachoval
- 41: Ellipse
- 50: Silikonüberzugsstück
- 60: Umgebungsdrucksensor
- 99: Schweißnaht

- AW: Aufweitung
- AWH: Auswurfhöhe
- LR: Referenzlänge
- P: Prozessdruck

## Patentansprüche

1. Messsystem (1) für eine physikalische Größe, umfassend
- ein Gehäuse (7),
- ein Messrohr (2), umfassend
- zumindest einen rohrförmigen Verformungskörper (3), dessen Querschnitt zumindest partiell definiert von einem Kreisquerschnitt abweichend deformiert ist und welcher sich unter Druck elastisch aufweitet,
- zwei Zuführabschnitte (4), welche jeweils an Endabschnitten (3a) des Verformungskörpers (3) angebracht sind und an ihren äußeren Randabschnitten (4a) jeweils einen Kreisquerschnitt aufweisen,
- zwei Dichtabschnitte (5) zum dichtenden Ankoppeln eines Messsystems (1) an einen Prozess, wobei die Dichtabschnitte (5) an den äußeren Randabschnitten (4a) der Zuführabschnitte (4) angeformt sind, und
- zwei angeformte Tragabschnitte (6), welche das Gehäuse (7) tragen,
- eine Messsensorik (8), welche zumindest an zwei Punkten an einem Abschnitt des Verformungskörpers (3) Werte einer Dehnung und/oder Aufweitung (AW) misst, und
- eine Auswerteeinheit, welche gemessene Werte der Dehnung und/oder Aufweitung (AW) elektronisch auswertet und als Messsignal ausgibt,
- wobei das Gehäuse (7) das Messrohr (2) in seiner Erstreckungsrichtung (32) außen zumindest teilweise umfasst und stabilisiert, **dadurch gekennzeichnet, dass** das Gehäuse (7) das Messrohr (2) dichtend umschließt und mit einem Vakuum oder mit einem Unterdruck gegenüber der Außenatmosphäre versehen ist.

2. Messsystem (1) nach Anspruch 1, wobei das Messrohr (2) innen mit Silikon oder einem wechselbaren Silikonüberzugsstück (50) ausgekleidet ist.

3. Messsystem (1) nach Anspruch 1 oder 2, wobei der Verformungskörper (3) des Messrohrs (2) eine Wandstärke von 0,1 mm bis 0,5 mm oder von 0,2 mm bis 3,0 mm aufweist.

4. Messsystem (1) nach einem der vorhergehenden Ansprüche, wobei die Zuführabschnitte (4) eine Wandstärke aufweisen, welche einer Wandstärke des Verformungskörpers (3) entspricht.

5. Messsystem (1) nach einem der vorhergehenden Ansprüche, wobei die Zuführabschnitte (4) derart massiv ausgeführt sind, dass diese gegenüber dem Verformungskörper (3) eine geringere Deformierbarkeit aufweisen, und/oder wobei die Zuführabschnitte (4) einen Übergang der Innenkontur von kreisförmig in oval aufweisen.

6. Messsystem (1) nach einem der vorhergehenden Ansprüche, wobei die Zuführabschnitte (4) einteilig mit den Tragabschnitten (6) und den Dichtabschnitten (5) ausgeführt sind.

7. Messsystem (1) nach einem der vorhergehenden Ansprüche, wobei das Gehäuse (7) stoffschlüssig und dichtend an die Tragabschnitte (6) angefügt ist.

8. Messsystem (1) nach einem der vorhergehenden Ansprüche, wobei das Gehäuse (7) einen Serviceport zur Installation oder Kontrolle des Vakuums oder Unterdrucks aufweist.

9. Messsystem (1) nach einem der vorhergehenden Ansprüche, wobei das Gehäuse (7) im Inneren einen Drucksensor oder Vakuumsensor (16) zur Überwachung des Vakuums oder des Unterdrucks aufweist.

10. Messsystem (1) nach einem der vorhergehenden Ansprüche, wobei das Messrohr (2) einen aufgebrachten Temperatursensor (17) aufweist, der im Inneren des Gehäuses (7) positioniert ist.

11. Messsystem (1) nach einem der vorhergehenden Ansprüche, wobei das Gehäuse (7) zur Außenatmosphäre hin oder zu einem zweiten Teil des Gehäuses (7) mit einer Glasdurchführung (34) versehen ist, durch welche Kontakte zur Signalübertragung geführt sind.

12. Messsystem (1) nach einem der vorhergehenden Ansprüche, umfassend eine per Steckkontakt kontaktierbare Schnittstelle und/oder eine Anzeige zur Ausgabe von Messwerten.

13. Messsystem (1) nach einem der vorhergehenden Ansprüche, wobei die Auswerteeinheit anhand von
- mittels eines optischen Messsystems erfassten Daten,
- mittels einer Laseroptik (8B) erfassten Daten, wobei die Laseroptik (8B)
- anhand von über Spiegel (10, 11, 12) geleiteter Laserstrahlung eine Referenzmessung durchführt
und/oder
- anhand von über einen Strahlteiler (35) oder einen gemeinsamen Gang über zumindest drei Spiegel (10, 11, 12) geführter Laserstrahlung eine Direktmessung durchführt,
- mittels zumindest eines kapazitiven Sensors (8A) erfassten Daten,
- mittels zumindest eines dehnungssensitiven optischen Fasersensors (8D), welcher um das Messrohr (2) gewickelt ist, erfassten Daten,
- mittels zwei oder vier Dehnungsmessstreifen (8C) erfassten Daten
- mittels einer Wheatstonebrücke, welche aus Dehnungsmessstreifen (8C) gebildet ist, erfassten Daten und/oder
- mittels zumindest eines Surface-Acoustic-Wave-Sensors (8E) erfassten Daten Dehnungen und/oder Aufweitungen (AW) des Verformungskörpers (3) des Messrohrs (2) auswertet.

14. Messsystem (1) nach einem der vorhergehenden Ansprüche, umfassend Sensoren zur Ermittlung eines Durchflusses und zumindest eine Ausgabeeinheit zur Ausgabe eines den Durchfluss, einen Druck und eine Temperatur umfassenden Signals.

15. Messsystem (1) nach einem der vorhergehenden Ansprüche, wobei das Gehäuse (7) eine Länge von 100 mm bis 300 mm oder von 50 mm bis 800 mm hat.

16. Messsystem (1) nach einem der vorhergehenden Ansprüche, wobei das Messrohr (2) und die Zuführabschnitte (4) mittels angeschweißten, durchgeschweißten, orbital-geschweißten und/oder lasergeschweißten Schweißnähten (99) gefügt sind.

17. Messsystem (1) nach Anspruch 16, wobei im Bereich der Schweißnähte (99) eine Rauheit einer Innenoberfläche des Messrohrs (2) und der Zuführabschnitte (4) einen Ra-Wert von kleiner oder gleich 3 µm, insbesondere von kleiner oder gleich 2 µm, insbesondere von kleiner oder gleich 0,8 µm, aufweist.

18. Messsystem (1) nach Anspruch 16 oder 17, wobei im Bereich der Schweißnähte (99) ein Übergang zwischen einer Innenoberfläche des Messrohrs (2) und der Zuführabschnitte (4) eben und/oder ohne Kanten, Stufen und/oder ohne Auswürfe mit einer Höhe von maximal 2 mm verläuft.

19. Messsystem (1) nach einem der vorhergehenden Ansprüche, wobei der Verformungskörper (3) und/oder die Zuführabschnitte (4) einen größeren Durchmesser und/oder Querschnitt als die Dichtabschnitte (5) aufweisen bzw. aufweist.

## Claims

1. Measuring system (1) for a physical variable, comprising
- a housing (7),
- a measuring tube (2), comprising
- at least one tubular deformation body (3), the cross section of which is deformed in an at least partially defined manner and so as to differ from a circular cross section and which widens elastically under pressure,
- two feed sections (4) which are each fitted to end sections (3a) of the deformation body (3) and each have a circular cross section at their outer edge sections (4a),
- two sealing sections (5) for sealingly coupling a measuring system (1) to a process, wherein the sealing sections (5) are integrally formed on the outer edge sections (4a) of the feed sections (4), and
- two integrally formed supporting sections (6) which support a housing (7),
- a measuring sensor assembly (8) which measures values of extension and/or expansion (AW) at least at two points on a section of the deformation body (3), and
- an evaluation unit which electronically evaluates measured values of extension and/or expansion (AW) and outputs them as measurement signals,
- wherein the housing (7) at least partially surrounds the outside of the measuring tube (2) in its direction of extent (32) and stabilizes the measuring tube,
**characterized in that**
the housing (7) sealingly encloses the measuring tube (2) and is provided with a vacuum or with a negative pressure with respect to the external atmosphere.

2. Measuring system (1) according to Claim 1, wherein the inside of the measuring tube (2) is lined with silicone or an exchangeable silicone coating piece (50).

3. Measuring system (1) according to Claim 1 or 2, wherein the deformation body (3) of the measuring tube (2) has a wall thickness of 0.1 mm to 0.5 mm or of 0.2 mm to 3.0 mm.

4. Measuring system (1) according to any of the preceding claims, wherein the feed sections (4) have a wall thickness which corresponds to a wall thickness of the deformation body (3).

5. Measuring system (1) according to any of the preceding claims, wherein the feed sections (4) are of solid design in such a way that they have a lower degree of deformability than the deformation body (3), and/or wherein the feed sections (4) exhibit a transition of the inner contour from circular to oval.

6. Measuring system (1) according to any of the preceding claims, wherein the feed sections (4) are designed in one piece with the supporting sections (6) and the sealing sections (5).

7. Measuring system (1) according to any of the preceding claims, wherein the housing (7) is joined to the supporting sections (6) by a material bond and in a sealing manner.

8. Measuring system (1) according to any of the preceding claims, wherein the housing (7) has a service port for installing or controlling the vacuum or negative pressure.

9. Measuring system (1) according to any of the preceding claims, wherein the housing (7) has, in the interior, a pressure sensor or vacuum sensor (16) for monitoring the vacuum or the negative pressure.

10. Measuring system (1) according to any of the preceding claims, wherein the measuring tube (2) has a mounted temperature sensor (17) which is positioned in the interior of the housing (7).

11. Measuring system (1) according to any of the preceding claims, wherein the housing (7) is provided with a glass feed-through (34), through which contacts for signal transmission are guided, in the direction of the external atmosphere or to a second part of the housing (7).

12. Measuring system (1) according to any of the preceding claims, comprising an interface contactable by plug-in contact and/or a display for outputting measurement values.

13. Measuring system (1) according to any of the preceding claims, wherein the evaluation unit evaluates extension and/or expansion (AW) of the deformation body (3) of the measuring tube (2) on the basis of
- data detected by means of an optical measuring system,
- data detected by means of a laser optics assembly (8B), wherein the laser optics assembly (8B)
- carries out a reference measurement on the basis of laser radiation directed by means of mirrors (10, 11, 12)
and/or
- carries out a direct measurement on the basis of laser radiation guided via a beam distributor (35) or a common passage via at least three mirrors (10, 11, 12),
- data detected by means of at least one capacitive sensor (8A),
- data detected by means of at least one extension-sensitive optical fibre sensor (8D), which is wound around the measuring tube (2),
- data detected by means of two or four strain gauges (8C),
- data detected by means of a Wheatstone bridge, which is formed from strain gauges (8C), and/or
- data detected by means of at least one surface acoustic wave sensor (8E).

14. Measuring system (1) according to any of the preceding claims, comprising sensors for ascertaining a throughflow and comprising at least one output unit for outputting a signal comprising the throughflow, a pressure and a temperature.

15. Measuring system (1) according to any of the preceding claims, wherein the housing (7) has a length of 100 mm to 300 mm or of 50 mm to 800 mm.

16. Measuring system (1) according to any of the preceding claims, wherein the measuring tube (2) and the feed sections (4) are joined by means of welded-on, welded-through, orbitally welded and/or laser-welded weld seams (99).

17. Measuring system (1) according to Claim 16, wherein, in the region of the weld seams (99), a roughness of an inner surface of the measuring tube (2) and the feed sections (4) has an Ra value of less than or equal to 3 µm, in particular of less than or equal to 2 µm, in particular of less than or equal to 0.8 µm.

18. Measuring system (1) according to Claim 16 or 17, wherein, in the region of the weld seams (99), a transition between an inner surface of the measuring tube (2) and the feed sections (4) runs flat and/or without edges, steps and/or without ejections with a height of at least 2 mm.

19. Measuring system (1) according to any of the preceding claims, wherein the deformation body (3) and/or the feed sections (4) have or has a larger diameter and/or cross section than the sealing sections (5).

## Revendications

1. Système de mesure (1) destiné à une grandeur physique, ledit système de mesure comprenant
- un boîtier (7),
- un tube de mesure (2), comprenant
- au moins un corps de déformation tubulaire (3) dont la section transversale est déformée d'une manière au moins partiellement définie en s'écartant d'une section transversale circulaire et qui s'élargit élastiquement sous pression,
- deux portions d'alimentation (4), qui sont chacune fixées aux portions d'extrémité (3a) du corps de déformation (3) et présentent chacune une section transversale circulaire au niveau de leurs portions de bord extérieures (4a),
- deux portions d'étanchéité (5) destinées à accoupler de manière étanche un système de mesure (1) à un processus, les portions d'étanchéité (5) étant moulées sur les portions de bord extérieures (4a) des portions d'alimentation (4), et
- deux portions de support moulées (6) qui portent le boîtier (7),
- un système de capteurs de mesure (8), qui mesure des valeurs de dilatation et/ou d'élargissement (AW) en au moins deux points sur une portion du corps de déformation (3), et
- une unité d'évaluation qui évalue électroniquement des valeurs mesurées de dilatation et/ou d'élargissement (AW) et les délivre sous forme de signal de mesure,
- le boîtier (7) entourant et stabilisant au moins partiellement le tube de mesure (2) à l'extérieur dans sa direction d'extension (32),
**caractérisé en ce que**
le boîtier (7) entoure le tube de mesure (2) de manière étanche et est soumis à un vide ou à une dépression par rapport à l'atmosphère extérieure.

2. Système de mesure (1) selon la revendication 1, le tube de mesure (2) étant doublé à l'intérieur de silicone ou d'une pièce de revêtement en silicone remplaçable (50).

3. Système de mesure (1) selon la revendication 1 ou 2, le corps de déformation (3) du tube de mesure (2) ayant une épaisseur de paroi de 0,1 mm à 0,5 mm ou de 0,2 mm à 3,0 mm.

4. Système de mesure (1) selon l'une des revendications précédentes, les portions d'alimentation (4) ayant une épaisseur de paroi qui correspond à une épaisseur de paroi du corps de déformation (3).

5. Système de mesure (1) selon l'une des revendications précédentes, les portions d'alimentation (4) étant réalisées de manière massive de façon à présenter une capacité de déformation inférieure à celle du corps de déformation (3), et/ou les portions d'alimentation (4) présentant une transition du contour intérieur allant d'une forme circulaire à une forme ovale.

6. Système de mesure (1) selon l'une des revendications précédentes, les portions d'alimentation (4) étant conçues d'une seule pièce avec les portions de support (6) et les portions d'étanchéité (5).

7. Système de mesure (1) selon l'une des revendications précédentes, le boîtier (7) étant fixé aux portions de support (6) par une liaison de matière et de manière étanche.

8. Système de mesure (1) selon l'une des revendications précédentes, le boîtier (7) comportant un orifice de service destiné à la mise en place ou au contrôle du vide ou de la dépression.

9. Système de mesure (1) selon l'une des revendications précédentes, le boîtier (7) comportant à l'intérieur un capteur de pression ou un capteur de vide (16) destiné à surveiller le vide ou la dépression.

10. Système de mesure (1) selon l'une des revendications précédentes, le tube de mesure (2) comportant un capteur de température monté (17) qui est positionné à l'intérieur du boîtier (7).

11. Système de mesure (1) selon l'une des revendications précédentes, le boîtier (7) étant pourvu d'une traversée en verre (34) qui est dirigée vers l'atmosphère extérieure ou vers une deuxième partie du boîtier (7), des contacts destinés à la transmission de signaux étant conduits au travers de la traversée en verre (34).

12. Système de mesure (1) selon l'une des revendications précédentes, comprenant une interface qui peut être contactée par le biais d'un contact enfichable et/ou un afficheur destiné à délivrer des valeurs de mesure.

13. Système de mesure (1) selon l'une des revendications précédentes, l'unité d'évaluation évaluant des dilatations et/ou élargissements (AW) du corps de déformation (3) du tube de mesure (2) sur la base de
- données acquises à l'aide d'un système de mesure optique,
- données acquises à l'aide d'une optique laser (8B), l'optique laser (8B) effectuant
- une mesure de référence à l'aide d'un rayonnement laser guidé par des miroirs (10, 11, 12).
et/ou
- une mesure directe à l'aide d'un rayonnement laser guidé à l'aide d'un séparateur de faisceau (35) ou d'un chemin commun par le biais d'au moins trois miroirs (10, 11, 12),
- données acquises à l'aide d'au moins un capteur capacitif (8A),
- données acquises à l'aide d'au moins un capteur à fibre optique (8D) sensible à la dilatation, qui est enroulé autour du tube de mesure (2),
- données acquises à l'aide de deux ou quatre jauges de contrainte (8C),
- données acquises à l'aide d'un pont de Wheatstone qui est formé à partir de jauges de contrainte (8C), et/ou
- données acquises à l'aide d'au moins un capteur d'ondes acoustiques de surface (8E).

14. Système de mesure (1) selon l'une des revendications précédentes, comprenant des capteurs destinés à déterminer un débit et au moins une unité de sortie destinée à délivrer un signal comprenant le débit, une pression et une température.

15. Système de mesure (1) selon l'une des revendications précédentes, le boîtier (7) ayant une longueur de 100 mm à 300 mm ou de 50 mm à 800 mm.

16. Système de mesure (1) selon l'une des revendications précédentes, le tube de mesure (2) et les portions d'alimentation (4) étant reliés à l'aide de cordons de soudure soudés de manière rapportée, soudés de manière traversante, soudés de manière orbitale et/ou soudés au laser (99).

17. Système de mesure (1) selon la revendication 16, une rugosité d'une surface intérieure du tube de mesure (2) et des portions d'alimentation (4) présentant, dans la zone des cordons de soudure (99), une valeur Ra inférieure ou égale à 3 µm, en particulier inférieure ou égale à 2 µm, notamment inférieure ou égale à 0,8 µm.

18. Système de mesure (1) selon la revendication 16 ou 17, une transition entre une surface intérieure du tube de mesure (2) et les portions d'alimentation (4) s'étendant sur une hauteur de 2 mm maximum de manière plane et/ou sans bords, marches et/ou sans projections, dans la zone des cordons de soudure (99).

19. Système de mesure (1) selon l'une des revendications précédentes, le corps de déformation (3) et/ou les portions d'alimentation (4) ayant un diamètre et/ou une section transversale supérieurs à ceux des portions d'étanchéité (5).
